# EUROPEAN PATENT SPECIFICATION

(11) **EP 0 320 178 B1**
(45) Date of publication and mention of the grant of the patent: **12.05.1993**
(21) Application number: 88311436.5
(22) Date of filing: 02.12.1988
(51) Int. Cl.: H02G 3/04

(54) **Connection apparatus**
Verbindungsvorrichtung
Dispositif de connexion

(30) Priority: 11.12.1987 GB 8729029
(43) Date of publication of application: 14.06.1989
(73) Proprietor: WALSALL CONDUITS LIMITED, West Bromwich West Midlands B70 0EB (GB)
(72) Inventor: Webb, Steven Paul, Tipton West Midlands (GB); Cook, Edward William, West Bromwich West Midlands (GB)
(74) Representative: Maury, Richard Philip

(56) References cited:
- FR-A- 2 546 343
- GB-A- 549 840
- GB-A- 883 483
- US-A- 1 782 779
- US-A- 3 117 358

## Description

This invention relates to apparatus for connecting adjacent lengths of cable trunkings.

Conventional lengths of cable trunking are generally cuboidal, that is to say approximately in the form of a rectangular parallelepiped; one face of the cuboid is a removable cover, allowing access to the cables contained within the trunking.

US-A-1782779 discloses connection apparatus in which a conduit is held within a connector member by means of a screw which extends through the connector member into the space between the inner surface of the connector member and the conduit. The screw is dimensioned such that as it is advanced into the space, it urges apart the inner surface of the connector member and one side of the conduit until the opposite side of the conduit contacts the opposite inner surface of the connector member. In this way, the conduit is held in position by the frictional engagement of the contacting surfaces of the conduit and connector member.

A defect of this apparatus is that the screw may deform the side of the conduit. This reduces the rigidity of the conduit.

It is an object of the present invention to provide a structurally rigid joint between two lengths of cable trunking which may be easily assembled.

According to the invention, apparatus for connecting together two lengths of cable trunking comprises a connector member, adapted to receive the respective ends of the lengths of trunking and characterised in that it comprises at least one elongate tapered wedge member, adapted to be driven between one end of the connector member and the lengths of trunking fitted therein with the taper extending lengthwise along the trunking, so as to urge co-operating surfaces of the connector member and the length of trunking firmly into frictional engagement.

Such an arrangement serves to secure the trunking length firmly within the connector member, thus forming a rigid joint. In practice both trunking lengths will normally be secured within opposite ends of the connector member by means of respective wedge members.

The invention thus has the advantage of reducing the deflection occurring at the connector positions in trunking beams.

Preferably the connector member has at each end substantially the same cross-sectional shape as the trunking lengths, although its dimensions must, of course, be slightly larger so that the trunking lengths fit inside the connector member. The shape and dimensions of the connector member can readily be selected to suit the particular form of trunking lengths which it is designed to join together.

The wedge member may have at least one ridge extending parallel to the thin edge thereof. Preferably at least one face of the connector member has at least one inwardly-projecting formation, preferably a louvred indentation, which is capable of engaging with the wedge member ridge or ridges so as to secure the wedge member against withdrawal from between the said face of the connector member and the respective trunking length. This provides a tight enclosure to connect the trunking lengths.

Conveniently, to ensure engagement, the louvred indentations at the middle of the connector member are more deeply indented than those at the ends. It is preferable that the increase in depth matches precisely with the slope of the wedge member. The louvres are inclined inwards towards the central transverse plane of the connector member, all the louvres at one end of the connector member thus being formed in the opposite direction to those at the other end of the connector member.

Means may be provided within the connector member to prevent the trunking lengths extending any further than half-way along the connector. For example, a stop piercing may be formed extending into the conductor at the middle thereof.

One embodiment of the invention will now be illustrated, by way of example, with reference to the drawings in which
Figure 1 is a perspective view of a connector member, a pair of wedge members and the ends of two lengths of trunking to be joined together, and
Figure 2 is a longitudinal section through the connector member of Figure 1 with the wedge members and lengths of trunking inserted therein.

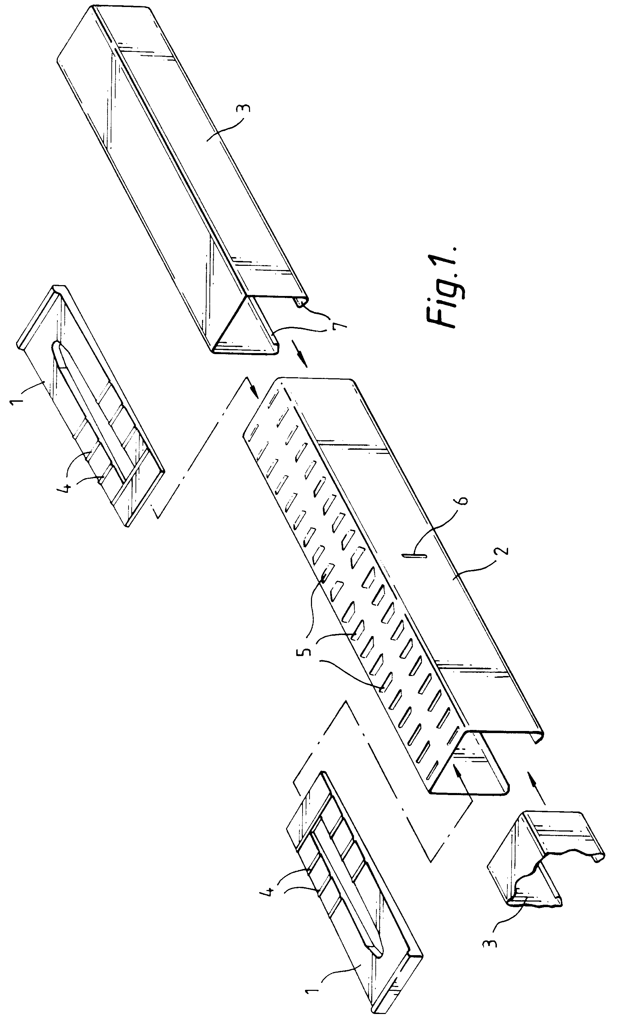

In Figure 1, each length of trunking 3, only part of which is shown, is formed of sheet metal bent into cuboidal shape with one open side, the edges 7 of the sheet metal bounding the open side being curved inwards as shown to form flanges which define longitudinal corner channels.

The connector member 2 is also formed from sheet metal, of approximately the same shape of cross-section as the lengths of trunking, but is dimensioned so that the ends of the lengths of trunking can be slid into it from opposite ends.

The face of the connector member 2 opposite the open side has indented louvres 5 formed therein, the louvres on one side of the central transverse plane of the connector member 2 being directed in the opposite direction to those in the other side. Ten louvres or more may be formed in the connector member 2. To prevent the length of trunking 3 sliding more than half-way through the connector member 2, a stop piercing 6 is provided, extending into the connector member 2 at the mid-way point. This ensures that the connection is formed at the centre of the connector member 2.

Each wedge member 1 is a nylon tapered drift piece, having four ridges 4 formed in one face thereof and extending transversely across it.

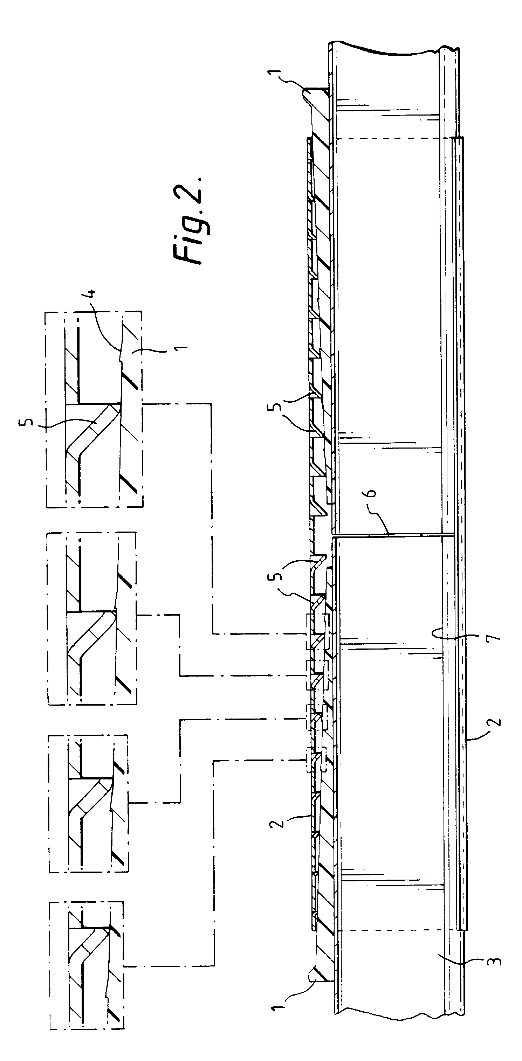

Figure 2 shows the assembled connected joint. To form the joint, one of the lengths of trunking 3 is slid into the connector member 2, with the open faces of the length of trunking and connector member in register, until it reaches the stop piercing 6. A wedge 1 is then inserted between the length of trunking 3 and the louvred face of the connector 2 and is hammered into position. The same procedure is then followed for the other length of trunking 3 to form a rigid joint. The inturned flanges of each length of trunking 3 are pressed against the complementary internal surfaces of the coreesponding flanges of the connector member 2, and the reaction force provides a friction fit.

The pitch of the ridges 4 is set so as to provide a Vernier effect with the louvres on the connector member 2. Thus, the pitches of the ridges 4 and louvres 5 differ slightly. As the wedge 1 is hammered into place, a slight ratchet engagement of small increments locks the wedge 1 into position at any point during the insertion. The depth of the louvres 5 increases progressively towards the centre of the connector member 2 to allow for the decreasing width of the wedge 1. This ensures that the lengths of trunking 3 are parallel to one another and to the connector member 2.

Following assembly and installation the open sides of the trunking lengths and connector members can be closed by co-operating covers, but such covers do not form part of the present invention and have not been illustrated.

The use of tapered elongate wedges in securing the connector member provides an even pressure which maintains the electrical earth continuity between lengths of trunking.

As the securing force of the wedge is not concentrated in any particular region, it avoids local deformation and consequent reductions in rigidity.

By providing a plurarity of ridges on the wedge, a series of locking positions of the joint ensure that the connection member holds the trunking lengths in place, irrespective of the distance the wedge has been driven.

The use of this type of joint construction is not restricted to joints between lengths of trunking of the type described.

## Claims

1. Apparatus for connecting together two lengths of cable trunking, comprising : a connector member (2), adapted to receive the respective ends of the lengths of trunking (3) and characterised in that it comprises at least one elongate tapered wedge member (1), adapted to be driven between one end of the connector member and the length of trunking fitted therein, with the taper extending lengthwise along the trunking, so as to urge co-operating surfaces (7) of the connector member and the length of trunking firmly into frictional engagement.

2. A cable trunking joint comprising : two lengths of cable trunking (3) and a connector member (2) receiving the respective ends of the trunking lengths, and characterised by at least one elongate tapered wedge member (1) driven between one end of the connector member and the trunking length fitted therein, with the taper extending lengthwise along the trunking, so as to urge co-operating surfaces (7) of the connector member and length of trunking firmly into frictional engagement.

3. A joint according to Claim 2, in which, at each end, the connector member (2) has substantially the same cross-sectional shape as the corresponding lengths of trunking (3), but is slightly larger.

4. Apparatus according to Claim 1, or a joint according to Claim 2 or 3, in which the connector member (2) is generally cuboidal with one open side.

5. Apparatus according to Claim 1 or 4, or a joint according to Claim 2 or 3, in which the wedge member (1) has at least one ridge (4) extending parallel to the thin edge thereof.

6. Apparatus or a joint according to Claim 5, in which at least one face of the connector member has at least one inwardly-projecting formation (5) capable of engaging with the wedge member ridge or ridges (4) so as to secure the wedge member (1) against withdrawal from between the said face of the connector member (2) and the respective length of trunking (3).

7. Apparatus or a joint according to Claim 6, in which there is a plurality of the said formations (5) and ridges (4), whose pitches differ to produce a Vernier effect between the wedge (1) and the connector member (2).

8. Apparatus or a joint according to Claim 6 or 7, in which the inwardly-projecting formations (5) toward the middle of the connector member (2) are progressively more deeply indented than those at the ends.

9. Apparatus or a joint according to Claim 6, 7 or 8, in which the inwardly-projecting formations are louvred indentations (5) of which the louvres are inclined inwards towards the central transverse plane of the connector member.

10. Apparatus or a joint according to any preceding Claim, in which means (6) are provided within the connector member (2) to prevent the lengths of trunking (3) extending any further than half-way along the connector.

## Patentansprüche

1. Vorrichtung zum Verbinden zweier Kabelkanallängen miteinander, aufweisend: ein Verbindungsteil (2), dazu ausgelegt, die jeweiligen Enden der Längen von Kanälen (3) aufzunehmen, und dadurch gekennzeichnet, daß es zumindest ein längliches, dünner werdendes keilförmiges Teil (1) umfaßt, das dazu ausgelegt ist, zwischen einem Ende des Verbindungsteils und der darin eingepaßten Kanallänge angetrieben zu werden, wobei sich die Dünnerwerdung längsweise entlang des Kanals so erstreckt, daß zusammenwirkende Flächen (7) des Verbindungsteils und der Kanallänge fest in reibschlüssige Verbindung gezwungen werden.

2. Kabelkanalverbindung, aufweisend: zwei Kabelkanallängen (3) und ein Verbindungsteil (2), das die jeweiligen Enden der Kanallängen aufnimmt, und durch zumindest ein längliches, dünner werdendes keilförmiges Teil (1) gekennzeichnet, das zwischen einem Ende des Verbindungsteils und der darin eingepaßten Kanallänge angetrieben wird, wobei sich die Dünnerwerdung längsweise entlang des Kanals so erstreckt, daß zusammenwirkende Flächen (7) des Verbindungsteils und der Kanallänge fest in reibschlüssige Verbindung gezwungen werden.

3. Verbindung nach Anspruch 2, in der das Verbindungsteil (2) an jedem Ende im wesentlichen dieselbe Querschnittsform wie die entsprechenden Kanallängen (3) aufweist, jedoch geringfügig größer ist.

4. Vorrichtung nach Anspruch 1 oder eine Verbindung nach Anspruch 2 oder 3, in welchen das Verbindungsteil (2) im wesentlichen quaderförmig mit einer offenen Seite ist.

5. Vorrichtung nach Anspruch 1 oder 4 oder Verbindung nach Anspruch 2 oder 3, in welchen das keilförmige Teil (1) zumindest eine Rippe (4) aufweist, die sich parallel zu seiner dünnen Kante erstreckt.

6. Vorrichtung oder Verbindung nach Anspruch 5, in denen zumindest eine Fläche des Verbindungsteils zumindest eine nach innen vorstehende Ausbildung (5) aufweist, die imstande ist, in die Rippe oder Rippen (4) des keilförmigen Teils so einzugreifen, daß das keilförmige Teil (1) gegen Herausziehen zwischen der Fläche des Verbindungsteils (2) und der jeweiligen Kanallänge (3) gesichert wird.

7. Vorrichtung oder Verbindung nach Anspruch 6, in welchen mehrere dieser Ausbildungen (5) und Rippen (4) vorhanden sind, deren Abstände zum Hervorrufen eines Verniereffektes zwischen dem Keil (1) und dem Verbindungsteil (2) differieren.

8. Vorrichtung oder Verbindung nach Anspruch 6 oder 7, in welchen die nach innen vorstehenden Ausbildungen (5) zur Mitte des Verbindungsteils (2) hin fortschreitend tiefer ausbuchten als die an den Enden.

9. Vorrichtung oder Verbindung nach Anspruch 6, 7 oder 8, in welchen die nach innen vorstehenden Ausbildungen geschlitzte Zacken (5) sind, wobei die Schlitze nach innen zur zentralen transversalen Ebene des Verbindungsteils hin geneigt sind.

10. Vorrichtung oder Verbindung nach einem vorhergehenden Anspruch, in welchen eine Einrichtung (6) innerhalb des Verbindungsteils (2) vorgesehen ist, die verhindert, daß sich die Kanallängen (3) irgendwie weiter als über die Hälfte des Verbinders erstrecken.

## Revendications

1. Appareil de raccordement de deux tronçons de liaison par câble, comprenant un organe (2) formant connecteur, destiné à loger les extrémités respectives des tronçons de liaison (3), et caractérisé en ce qu'il comporte au moins un organe allongé (1) en forme de coin de dimension variant progressivement, destiné à être introduit entre une première extrémité de l'organe connecteur et le tronçon de liaison placé à l'intérieur, la partie de dimension variant progressivement étant placée longitudinalement le long de la liaison afin qu'elle repousse fermement les surfaces coopérantes (7) de l'organe connecteur et du tronçon de liaison en coopération par friction.

2. Raccord de liaison par câble comprenant deux tronçons de liaison (3) par câble et un organe connecteur (2) logeant les extrémités respectives des tronçons de liaison, caractérisé par au moins un organe allongé (1) en forme de coin de dimension variant progressivement introduit entre une première extrémité de l'organe connecteur et le tronçon de liaison placé à l'intérieur, la partie de dimension variant progressivement étant disposée suivant la longueur de la liaison afin que les surfaces coopérantes (7) de l'organe connecteur et du tronçon de liaison soient repoussées fermement en coopération par friction.

3. Raccord selon la revendication 2, dans lequel, à chaque extrémité, l'organe connecteur (2) a pratiquement la même configuration en coupe que les tronçons correspondants de liaison (3), mais est légèrement plus gros.

4. Appareil selon la revendication 1, ou raccord selon la revendication 2 ou 3, dans lequel l'organe connecteur (2) a une forme générale de cube ayant une face ouverte.

5. Appareil selon la revendication 1 ou 4, ou raccord selon la revendication 2 ou 3, dans lequel l'organe (1) en forme de coin a au moins une nervure (4) disposée parallèlement à son bord mince.

6. Appareil ou raccord selon la revendication 5, dans lequel une face au moins de l'organe connecteur a au moins un organe conformé (5) qui dépasse vers l'intérieur et qui est destiné à coopérer avec la nervure ou les nervures (4) de l'organe en forme de coin afin que l'organe en forme de coin (1) soit fixé et ne puisse pas être retiré entre ladite face de l'organe connecteur (2) et le tronçon respectif de liaison (3).

7. Appareil ou raccord selon la revendication 6, dans lequel plusieurs organes conformés (5) et plusieurs nervures (4) sont incorporés, avec des pas différents donnant un effet de vernier entre le coin (1) et l'organe connecteur (2).

8. Appareil ou raccord selon la revendication 6 ou 7, dans lequel les organes conformés (5) passant vers l'intérieur au milieu du connecteur vers l'organe (2) sont évidés progressivement de plus en plus profondément par rapport à ceux des extrémités.

9. Appareil ou raccord selon la revendication 6, 7 ou 8, dans lequel les organes conformés dépassant vers l'intérieur sont des évidements (5) à lamelle dont les lamelles sont inclinées vers l'intérieur, vers le plan transversal central de l'organe connecteur.

10. Appareil ou raccord selon l'une quelconque des revendications précédentes, dans lequel un dispositif (6) est placé dans l'organe connecteur (2) afin que les tronçons de liaison (3) ne puissent pas aller plus loin que la moitié de la distance le long du connecteur.
